Europäisches Patentamt

European Patent Office

Office européen des brevets

(19)

(11) Numéro de publication : **0 487 363 A1**

# (12) DEMANDE DE BREVET EUROPEEN

(21) Numéro de dépôt : **91402751.1**

(22) Date de dépôt : **15.10.91**

(51) Int. Cl.⁵ : **H01B 17/58, A47B 21/00**

(30) Priorité : **17.10.90 FR 9012851**

(43) Date de publication de la demande :
**27.05.92 Bulletin 92/22**

(84) Etats contractants désignés :
**BE DE GB IT LU NL**

(71) Demandeur : **ERGAM RONEO Société Anonyme**
**37, Avenue de Friedland**
**F-75008 Paris (FR)**

(72) Inventeur : **Cathelineau, Jacques**
**La Maltière, St Sauveur**
**F-79300 Bressuire (FR)**

(74) Mandataire : **Orès, Bernard et al**
**Cabinet ORES 6, Avenue de Messine**
**F-75008 Paris (FR)**

(54) **Table de travail équipée d'un dispositif d'obturation passe-cables.**

(57)    Table de travail (30) équipée d'un dispositif d'obturation (100) d'une ouverture circulaire (40) de passage de câbles électriques, tout en permettant l'obturation de cette ouverture (40). Ce dispositif est pourvu d'un système de fixation à la table du type à baïonnette, qui a été conçu de manière à permettre l'intégration harmonieuse, à la fois esthétique et fonctionnelle, dans la table de travail (30), tout en permettant la libre orientation des câbles par rapport à l'emplacement d'un ou plusieurs appareils électriques destinés à être disposés sur la table.

Application à l'industrie de l'ameublement.

FIG.1

EP 0 487 363 A1

La présente invention est relative à une table de travail, telle qu'une table de bureau, une table de réunion ou une table de conférence, équipée d'un dispositif d'obturation passe-câbles permettant le passage de câbles électriques destinés à des appareils posés sur la table de travail.

Dans le domaine de l'architecture d'intérieur de bâtiments destinés à des entreprises exerçant une activité commerciale, libérale ou autre, l'une des contraintes qu'il faut satisfaire est constituée par le respect de la compatibilité avec les moyens de communication disponibles à l'ère actuelle - qu'on peut qualifier d'ère de "l'écran et du clavier" - tout en tenant compte des contraintes de luminosité du plan de travail.

En fait, l'existence de matériel informatique avec au moins un écran et un clavier (écran d'ordinateur, écran "MINITEL" et claviers correspondants, etc...) et de lampes de bureau posées sur le plan de travail (conjointement avec la documentation) exige l'acheminement de câbles à la face externe du plan de travail en passant par dessous celui-ci : classiquement la solution adoptée à cet effet pour desservir les appareils informatiques, électriques, etc... est de ménager une ouverture, généralement circulaire, dans l'épaisseur du plan de travail, cette ouverture étant obturée par un obturateur passe-câbles constitué par une pièce rapportée réalisée en matière plastique, qui est généralement différente de la matière dont se compose le plan de travail et qui ne s'intègre donc pas au plan de travail, par rapport auquel il fait apparaître - par ailleurs - une solution de continuité inacceptable du point de vue esthétique.

Le Modèle d'Utilité allemand DE-U-1 925 263 décrit une douille comportant à sa périphérie deux dents diamétralement opposées destinées à s'engager dans des encoches correspondantes d'une boîte de dérivation électrique, à laquelle elle est fixée à la manière d'un système à baïonnette. Toutefois, -mis à part le fait que ce document de l'Art antérieur concerne le domaine technique de l'industrie électrique, donc un domaine éloigné de celui défini par l'industrie des meubles-, il y a lieu de remarquer qu'il présente plusieurs aspects qui s'opposent à l'application au domaine visé par la présente invention, à savoir :

1) un épaulement annulaire de la collerette de la douille venant s'appliquer sur la plaque de la boîte qui présente une surface qui n'est pas à niveau avec la surface de cette plaque ;

2) des encoches de passage des dents du système à baïonnette qui sont ménagées dans toute l'épaisseur de la plaque et donc de la paroi du pourtour de l'ouverture ménagée dans cette plaque ;

3) des dents du système à baïonnette coulissant sur la surface de la plaque opposée à la surface d'application de l'épaulement précité ;

4) une distance entre cet épaulement et les dents qui est sensiblement égale à l'épaisseur totale de la plaque.

La présente invention s'est donné pour but de pourvoir à une table de travail, telle qu'une table de bureau, une table de réunion ou une table de conférence, équipée d'un dispositif d'obturation passe-câbles permettant le passage de câbles électriques destinés à des appareils posés sur la table de travail, qui répond aux nécessités de la pratique mieux que les tables de travail du même type et visant au même but, antérieurement connues, notamment en ce qu'elle présente par rapport à celles-ci, en particulier, les avantages suivants :

– libre orientation de la sortie des câbles par rapport à l'emplacement de(s) appareil(s) desservi(s) par ceux-ci, et

– intégration harmonieuse, à la fois esthétique et fonctionnelle, dans la table de travail, du dispositif passe-câbles, de manière à constituer un ensemble monobloc après assemblage, tout en autorisant la libre orientation évoquée ci-dessus.

La présente invention a pour objet une table de travail telle qu'une table de bureau, de réunion ou de conférence, comprenant un dispositif circulaire d'obturation passe-câbles, qui est destiné à obturer une ouverture circulaire de passage de câbles électriques de desserte d'au moins un appareil électrique destiné à être supporté par ladite table et qui comporte des moyens de fixation à baïonnette, ces moyens de fixation comprenant, d'une part, des moyens ménagés dans la table constitués par deux rails ou nervures circulaires, qui font saillie horizontalement à partir sensiblement du tiers intermédiaire de l'épaisseur de la table -et ce à partir du pourtour de l'ouverture de cette table- et qui sont séparés par deux encoches diamétralement opposées et, d'autre part, des moyens complémentaires ménagés dans un obturateur, ou couvercle, passe-câbles monté en rotation libre et comprenant deux portions ou dents, également diamétralement opposées, qui font saillie horizontalement à partir sensiblement du tiers inférieur dudit couvercle -sans toutefois dépasser l'encombrement de ce couvercle et donc de l'ouverture correspondante- et qui sont destinées à passer par lesdites encoches, l'épaisseur du couvercle étant sensiblement égale à l'épaisseur de la table, lesdites dents étant disposées à un niveau inférieur par rapport au niveau d'emplacement desdits rails ou nervures, en sorte que ces deux nervures constituent à la fois deux rails de glissement des dents, suivant la face inférieure de ces rails, et des butées pour lesdites dents, la surface extérieure du couvercle étant au même niveau que la surface extérieure de la table.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés, dans lesquels :

    – la figure 1 est une double vue illustrant une table de travail équipée de l'obturateur passe-câbles conforme à l'invention, qui est représenté intégré à la table (à savoir, en position de travail) ainsi qu'en vue éclatée et en perspective, permettant d'apprécier la manière d'introduire (par un mouvement de translation d'approchement et par un mouvement de rotation de verrouillage) l'obturateur dans l'ouverture du plan de travail, qu'il est destiné à obturer, tout en permettant le passage des câbles ainsi que leur orientation par rapport à l'appareil ou aux appareils desservis ;

    – la figure 2 est une vue de dessus de l'obturateur illustré à la figure 1 ;

    – la figure 3 est une vue en coupe suivant III de la figure 2 ;

    – la figure 4 est une vue en coupe suivant IV de la figure 2 ;

    – la figure 5 est une vue de dessus d'une portion de plan de travail illustrant l'ouverture ménagée dans celui-ci pour le passage des câbles et destinée à être obturée par l'obturateur passe-câbles illustré aux figures 1 à 4 ;

    – la figure 6 est une vue en coupe suivant VI de la figure 5 ;

    – la figure 7 est une coupe, avec arrachements, de l'obturateur passe-câbles en position de travail dans la table qui en est équipée.

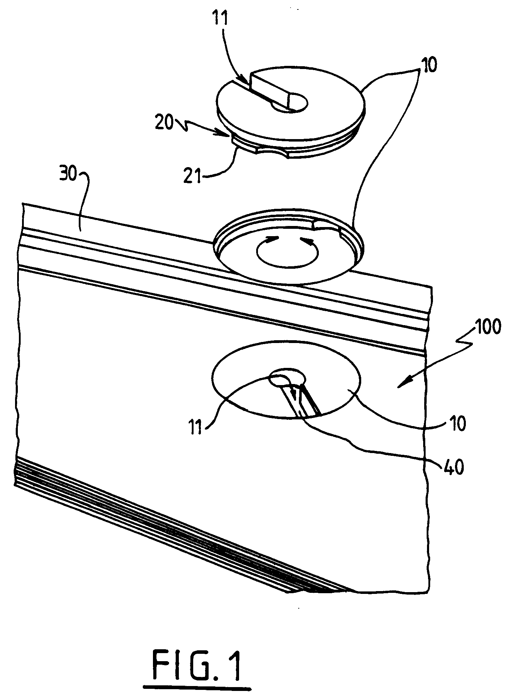

Le dispositif d'obturation 100 d'un plan de travail 30 conforme à l'invention, permettant le passage de câbles conducteurs électriques destinés à des appareils (informatiques, électroniques et/ou électriques, non représentés), comporte un obturateur passe-câbles 10, répondant aux objectifs visés par l'invention en instance, qui est illustré à la figure 1 et est équipé de moyens de fixation au plan de travail qui, tout en permettant le passage des câbles de desserte des appareils précités, assure leur libre orientation sur 360° (sauf deux positions diamétralement opposées, comme il sera précisé par la suite), et ce en fonction de l'emplacement sur le plan de travail de l'appareil ou des appareils desservis par les câbles. Le plan de travail et l'obturateur présentent de préférence la même épaisseur.

Ces moyens de fixation, permettant de résoudre le problème technique qui est à la base de la présente invention, sont essentiellement constitués par des moyens de fixation à baïonnette 20.

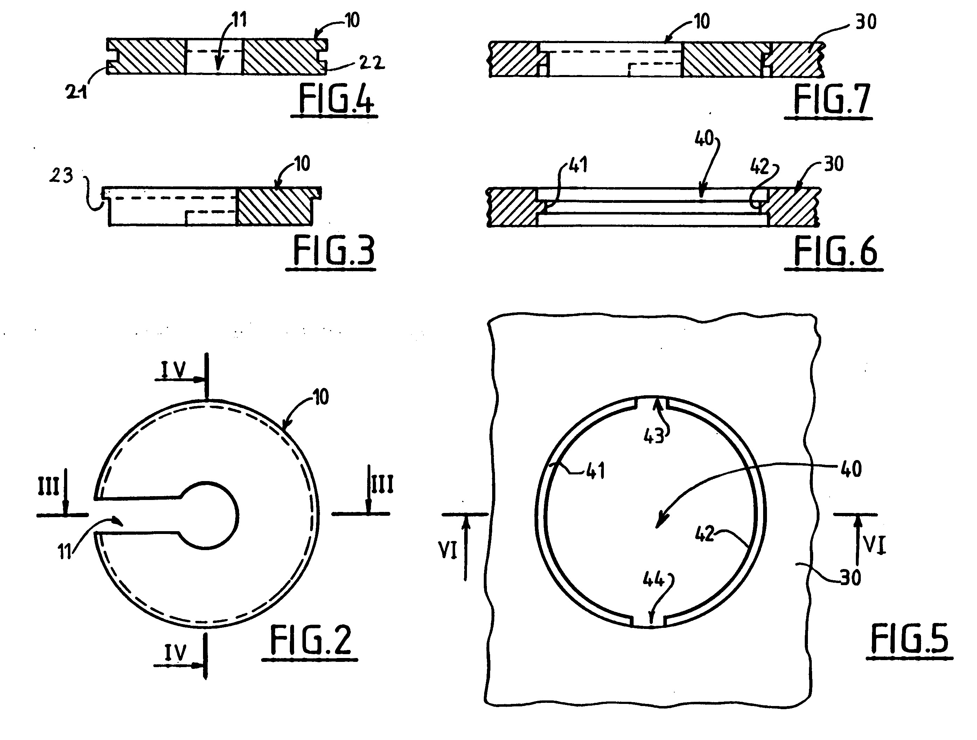

Ces moyens de fixation à baïonnette comportent, d'une part, deux portions 21 et 22 diamétralement opposées correspondant aux dents du système à baïonnette et faisant saillie horizontalement, sensiblement à partir du tiers inférieur de l'épaisseur de l'obturateur passe-câbles 10 et, d'autre part, deux rails 41 et 42 circulaires, dont la longueur est légèrement inférieure à celle de la semi-circonférence correspondante et qui font saillie horizontalement sensiblement à partir du tiers intermédiaire de l'épaisseur du plan de travail 30, à partir du pourtour de l'ouverture 40 destinée au passage des câbles de la partie inférieure du plan de travail vers la partie supérieure de celui-ci : entre les deux rails 41 et 42 existent deux solutions de continuité définies par deux encoches 43 et 44 destinées au passage des saillies 21 et 22 de l'obturateur, lorsque celui-ci est aligné axialement avec l'ouverture 40 pour obturer celle-ci (tout en permettant le passage de câbles et en assurant leur libre orientation par rapport à l'appareil desservi) : il est facile de comprendre (Cf. figure 7) que, à cause de l'emplacement des saillies 21 et 22 à un niveau inférieur par rapport au niveau d'emplacement des deux rails de glissement 41 et 42, ces saillies 21 et 22 glissent suivant la face inférieure des rails 41 et 42, qui constituent ainsi des butées pour les deux saillies 21 et 22. Cette disposition confère à l'obturateur passe-câbles 10 un caractère monobloc avec le plan de travail, tout en permettant la rotation de l'obturateur et donc la libre orientation des câbles par rapport aux appareils desservis, comme déjà évoqué plus haut.

Les deux encoches 43 et 44 correspondent aux seules positions où une traction accidentelle ou involontaire exercée sur les câbles fait déplacer l'obturateur de son logement, alors que dans toutes les autres positions, une telle traction ne déplace pas l'obturateur passe-câbles, et ce grâce à la présence des butées constituées par les rails de glissements de l'obturateur évoquées plus haut.

Bien entendu, les câbles précités sont destinés à traverser l'obturateur 10 par une ouverture 11, en forme de trou de serrure.

Bien qu'utilisant donc le même principe de fixation à baïonnette illustré par le Modèle d'Utilité allemand évoqué plus haut, la présente invention s'en détache par l'originalité d'application à une table de travail, c'est-à-dire par l'adoption de mesures qui permettent une intégration de l'obturateur passe-câbles dans la table de travail qui est à la fois fonctionnelle et esthétique, tout en permettant le passage des câbles et l'orientation de ceux-ci par rapport à un appareil électrique à alimenter supporté par la table.

Pour mieux apprécier l'activité inventive de la présente invention, il y a lieu d'attirer l'attention sur les nombreuses différences qui existent entre la solution objet de l'invention en instance et la solution décrite dans le Modèle d'Utilité allemand, ces différences pouvant être mieux saisies sur la base de la description précédente de ce Modèle d'Utilité.

On peut facilement remarquer que :

    1') l'épaulement annulaire 23 (Cf la figure 3) de support de l'obturateur passe-câbles 10, ainsi que les dents 21 et 22 du système à baïonnette et la distance entre cet épaulement et ces dents sont ménagés uniquement dans l'épaisseur de la table et occupent chacun sensiblement un tiers de cette épaisseur, avec l'épaulement et les dents occupant sensiblement le tiers supérieur et le tiers inférieur, respectivement, alors que la distance entre ces deux éléments correspond au tiers intermédiaire. Cela revient à dire que la surface externe (ainsi que la surface interne) de l'obturateur passe-câbles 10 est à niveau avec la surface externe de la table de travail (Cf la figure 7) ;

2') les encoches 43 et 44 de passage des dents 21 et 22, diamétralement opposées entre elles, sont ménagées dans la nervure annulaire 41-42 qui fait saillie, à partir sensiblement du tiers intermédiaire de la paroi du pourtour de l'ouverture 40 ménagée dans la table, parallèlement au plan de celle-ci, offrant ainsi appui à l'épaulement 23 de support de l'obturateur passe-câbles, tout en faisant en même temps rail de coulissement des dents 21 et 22 du système de fixation à baïonnette ;

3') les dents 21 et 22, qui sont ménagées sensiblement dans le tiers inférieur de l'épaisseur de l'obturateur passe-câbles 10, ne dépassent pas l'encombrement diamétral de celui-ci ;

4') la distance entre l'épaulement annulaire 23 et les dents 21, 22 est sensiblement égale à 1/3 de l'épaisseur de l'obturateur passe-câbles.

En outre, dans l'obturateur 10 est ménagée une ouverture qui est juste suffisante pour le passage des câbles ; de façon plus précise, cette ouverture est sensiblement en forme de trou de serrure pour permettre d'amener les câbles électriques vers l'appareil à alimenter, sans qu'ils gênent l'esthétique d'ensemble, tout en permettant la libre orientation des câbles par rapport à cet appareil.

Or, c'est au prix de toutes ces différences, qui ne sont ni décrites, ni suggérées par le Modèle d'Utilité allemand, qu'il a été possible d'effectuer, dans le cadre de la présente invention, l'intégration d'un obturateur passe-câbles dans une table de travail en adoptant le principe, connu, du système de fixation à baïonnette, pour harmoniser à la fois les exigences techniques avec les exigences esthétiques, qui sont très importantes dans le domaine d'application visé par l'invention en instance.

La revendication principale, tout en tenant compte de l'analyse précédente de l'état de la technique, a été rédigée en une seule partie parce que cette présentation de la revendication est la seule qui convient en l'espèce.

La description qui précède montre donc clairement que l'obturateur passe-câbles de la présente invention répond parfaitement au but visé plus haut, notamment en ce que, grâce à la conception spéciale du système de fixation à baïonnette, il est possible de l'intégrer au plan de travail, du point de vue esthétique (à cet effet, l'obturateur étant réalisé à partir d'une pièce ayant les mêmes caractéristiques de consistance, de coloris et d'épaisseur que le plan de travail) et fonctionnel, et ce sensiblement sans solution de continuité.

## Revendications

1 - Table de travail, telle qu'une table de bureau, de réunion ou de conférence, comprenant un dispositif circulaire d'obturation passe-câbles (100), qui est destiné à obturer une ouverture (40) circulaire de passage de câbles électriques de desserte d'au moins un appareil électrique destiné à être supporté par ladite table (30) et qui comporte des moyens de fixation à baïonnette, ces moyens de fixation comprenant, d'une part, des moyens ménagés dans la table (30) constitués par deux rails ou nervures circulaires (41,42), qui font saillie horizontalement à partir sensiblement du tiers intermédiaire de l'épaisseur de la table (30) -et ce à partir du pourtour de l'ouverture de cette table- et qui sont séparés par deux encoches (43,44) diamétralement opposées et, d'autre part, des moyens complémentaires ménagés dans un obturateur, ou couvercle, passe-câbles (10) monté en rotation libre et comprenant deux portions ou dents, également diamétralement opposées, (21,22), qui font saillie horizontalement à partir sensiblement du tiers inférieur dudit couvercle (10) -sans toutefois dépasser l'encombrement de ce couvercle (10) et donc de l'ouverture correspondante (40)- et qui sont destinées à passer par lesdites encoches (43,44), l'épaisseur du couvercle (10) étant sensiblement égale à l'épaisseur de la table (30), lesdites dents (21,22) étant disposées à un niveau inférieur par rapport au niveau d'emplacement desdits rails ou nervures (41,42), en sorte que ces deux nervures (41,42) constituent à la fois deux rails de glissement des dents (21,22), suivant la face inférieure de ces rails, et des butées pour lesdites dents (21,22), la surface extérieure du couvercle (10) étant au même niveau que la surface extérieure de la table (30).

2 - Table selon la revendication 1, dans laquelle le couvercle (10), monté en rotation libre, présente une ouverture de passage des câbles qui est sous forme de trou de serrure (11).

11

10

20

21

30

100

11

10

40

# FIG.1

FIG.4

11

10

22

21

FIG.7

10

30

FIG.3

23

10

FIG.6

40

41

42

30

FIG.2

IV

10

III

III

11

IV

FIG.5

VI

43

41

40

42

44

30

VI

EP 0 487 363 A1

**Office européen des brevets**

# RAPPORT DE RECHERCHE EUROPEENNE

Numero de la demande

EP    91 40 2751

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | DE-U-1 925 263 (BBC) <br> * page 2; revendications 1-3; figures 1-6 * <br> --- | 1 | H01B17/58 <br> A47B21/00 |
| A | US-A-3 783 175 (TIMMONS) <br> * le document en entier * <br><br> ----- | 1,2 | |
| | | | **DOMAINES TECHNIQUES RECHERCHES (Int. Cl.5)** <br><br> H01B <br> A47B <br> H02G |

Le présent rapport a été établi pour toutes les revendications

| Lieu de la recherche | Date d'achèvement de la recherche | Examinateur |
|---|---|---|
| LA HAYE | 28 JANVIER 1992 | RIEUTORT A.S. |